# EUROPEAN PATENT SPECIFICATION

(11) **EP 1 516 457 B1**
(45) Date of publication and mention of the grant of the patent: **31.12.2008**
(21) Application number: 03735739.9
(22) Date of filing: 26.06.2003
(51) Int. Cl.: H04L 12/28

(54) **MECHANISM FOR ESTABLISHING A COMMUNICATIONS GROUP**
MECHANISMEN ZUR HERSTELLUNG EINER KOMMUNIKATIONSGRUPPE
MECANISME DE MISE EN PLACE D'UN GROUPE DE COMMUNICATION

(30) Priority: 27.06.2002 FI 20021259
(43) Date of publication of application: 23.03.2005
(73) Proprietor: Nokia Corporation, 02150 Espoo (FI)
(72) Inventor: MYYRY, Matti, FIN-33900 Tampere (FI); WESTMAN, Ilkka, FIN-00510 Helsinki (FI)
(74) Representative: Äkräs, Tapio Juhani
(86) International application number: PCT/FI2003/000520
(87) International publication number: WO 2004/004224

(56) References cited:
- WO-A1-01/11830
- WO-A1-02/35867
- WO-A2-02/23818

## Description

### Field of the invention

The present invention relates to communications systems, and more particularly to mechanisms for establishing a communications group.

### Background of the invention

In order to create a group to be used e.g. for group communications information on the members of the group is required. The creator of the group has to find out who should belong to the group and what are the identifications of their user equipment. Such a group creation/modification mechanism is disclosed in WO-A-011830.

However, the collecting of information is difficult and time-consuming e.g. in situations where the group should be established as soon as possible and the members of the group are in the same room or outside near each other.

In the state of the art the information is usually pulled together manually. In some cases MSISDN (Mobile Subscriber international Integrated Services Digital Network) number, which uniquely defines the mobile subscriber, is used as the user equipment identification. It is also possible that some other user equipment identification (such as a nickname), which should be an easy and unique identification, has to be determined for communication inside the group. If this other identification is not known, every member of the group has to be asked for it separately. After that, user equipment identifications have to be entered to the terminal of the group creator, as well.

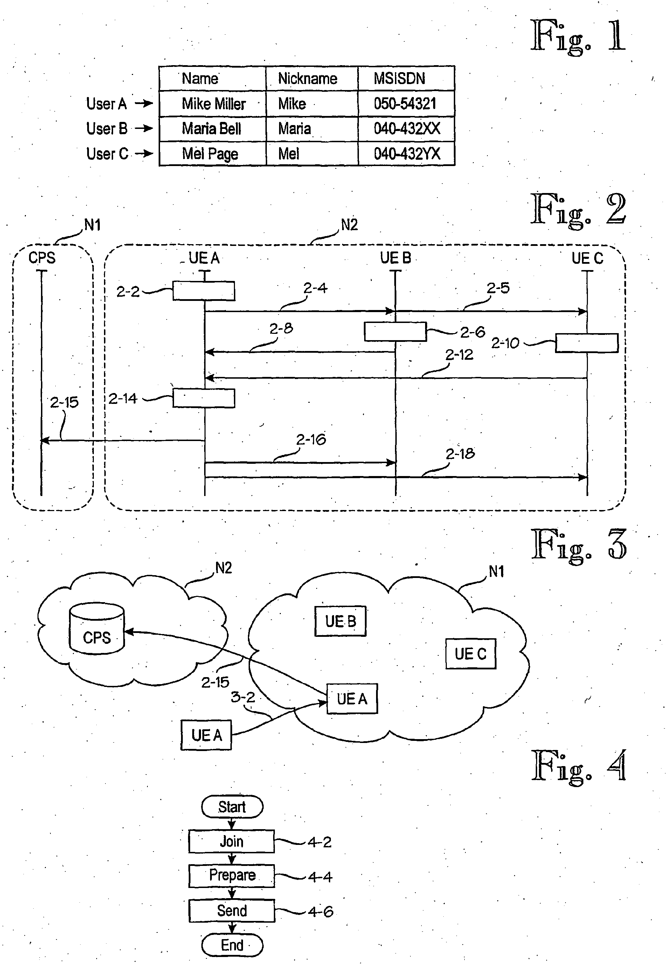

Figure 1 illustrates a table of group information that has to be collected in order to create the group. The table consists of the names of users, their nicknames and their identification codes. User A can have name Mike Miller, nickname "Mike" with MSISDN number 050-54321 as the identification number.

Another possibility for pulling information together in the state of the art is to use electronic business cards. After user equipment has sent their own information to the group creator, the group creator collects all that information from several different cards manually to his terminal. However, also this type of creation of groups with the help of business cards is rather complex.

### Brief disclosure of the invention

It is thus an object of the present invention to provide a method and an apparatus for implementing the method more effectively and faster. The objects of the invention are achieved by methods, user equipment and communications system disclosed in the independent claims. The preferred embodiments of the invention are disclosed in the dependent claims.

The invention is based on the idea of establishing a communications group in a communications network by sending from master user equipment to at least one slave user equipment via a communications medium, preferable a short-range communications medium that is separate from the primary communications medium of the communications network, a request prompting the user of the slave user equipment to send user information for group establishment in the communications network. The slave equipment sends to the master user equipment over the communications medium a response comprising user information for group establishment. The master user equipment creates or modifies the group based on the information received in responses from the at least one slave user equipment. Finally, the master user equipment sends the information on the created or modified group to the communications network or to the slave user equipments for establishing said group.

An advantage of the method and arrangement of the invention is easier and faster establishment of a group especially inside an office or outside between user equipment located near each other, and hence easier and faster establishment of group communication.

### Brief description of the drawings

In the following the invention will be described in greater detail by means of preferred embodiments with reference to the attached drawings, in which
Figure 1 illustrates a table of group information;
Figure 2 is a signalling chart for establishing a group;
Figure 3 is an example of a group to be established;
Figure 4 is a flow diagram illustrating an example of operation of user equipment as slave user equipment;
Figure 5 is a flow diagram illustrating an example of operation of user equipment as master user equipment;
Figure 6 is a simplified block diagram illustrating an example of a user terminal wherein the present invention can be applied; and
Figure 7 illustrates a communication system wherein clients entering a predetermined area are automatically asked to join a group communication group.

### Detailed description of the invention

In the following the invention and its embodiments will mainly be described in connection with two communications systems. However, the invention and its embodiments are not restricted to the number of communications systems. Also, regarding the invention, the operation and structure of communications systems are described only to a degree that will assist in comprehending the invention and its embodiments. The invention and its embodiments are not specific to the particular communications system, but it will be appreciated that the present invention and its embodiments have application in many system types and may, for example, be applied in a circuit switched domain e.g. in GSM (Global System for Mobile Communications) digital cellular communication system, in a packet switched domain, e.g. in the UMTS (Universal Mobile Telecommunications System) system, and e.g. in networks according to the IEEE 802.11 standards: WLAN, HomeRF or BRAN (Broadband Radio Access Networks) specifications (HIPERLAN1 and 2, HIPERACCESS). The invention and its embodiments can also be applied in ad hoc communications systems, such as an IrDA (Infrared Data Association) network or a Bluetooth network.

The user equipment that can be used to establish the group and group communication or that can be used as group member user equipment according to the invention and its embodiments can be e.g. conventional user equipment that can connect to a wireless local area network. A wireless local area network WLAN is a network in which the mobile user can connect to the local area network through a wireless connection. This kind of user equipment can be described as two-mode user equipment.

Exemplary user equipment is the user equipment according to 3GPP Rel5 or Rel6 (3^{rd} Generation Partnership Project, Release 5/Release 6), i.e. a terminal that supports a UMTS subscriber identity module USIM and the Uu interface. These user equipment can be recognized by an SIP URL (Session Initiation Protocol : Uniform Resource Locator) address. The address can be defined as a uniform resource locator used within a session initiation protocol SIP message to indicate the originator, current destination, and final recipient of an SIP request, and to specify redirection addresses. The SIP URL can be in the form of sip:user@host.

The user equipment UE1, UE2, UE3 can be a conventional mobile station which is further equipped with a wireless local area network service or capable to communicate any other short-range communications media. Although in the following the invention will be described by means of a Bluetooth and a wireless local area network service, the group establishment request and/or the response can comprise e.g. at least one of the following messages: a short message, an instant message, an e-mail message, a multimedia message, a unified messaging message, a WAP (Wireless Application Protocol) message or an SIP (Session Initiation Protocol) message. The mobile stations can also be mobile stations equipped with e.g. an instant message, an e-mail message, a multimedia message, a unified messaging message, a WAP (Wireless Application Protocol) message or an SIP (Session Initiation Protocol) message service.

The term 'pico network' can be defined as a wireless network with one or more small cells with a cell radius typically less than 50 metres. Pico networks are typically used in offices and in small outdoor facilities in cities. One typical pico network is a Bluetooth network, which uses technology designed to be embedded in electronic devices in order to provide wireless and seamless connections over short distances. The architecture of a typical Bluetooth pico network N1, as illustrated in Figure 3, comprises three equipments of which a first equipment UEA first enters 3-2 the area of network N1 and then takes the role of master equipment while the other equipment UEB and UEC work as slaves. In the operation of the Bluetooth network the master equipment UEA controls the operation of the other devices that are its slaves. UEA can also be defined as the group creator or as a client, while the other group members UEB and UEC can also be defined as servers. Connections in the Bluetooth network can be point-to-point or multipoint connections with the maximum range being about 10 meters.

After UEA, the creator of the group, has entered the network N1, e.g. a room in an office building, he has to find out who is present and what are the identifications of the present user equipment. Figure 2 describes these functions for establishing the group by means of a signalling chart. In step 2-2 the user UEA comes to a geographical or a coverage area where a group of equipment is located nearby. If user UEA has decided to establish the group, it can send a multicast request. The request can be sent in broadcast, in which the invitation, i.e. the request is directed to all mobile station which are located in the same area. In step 2-4 the request is sent to the user UEB using a multi-cast address. This multicast address can be presented as a short identification ID unique in a reserved set or a subset of multicast addresses from which the master equipment can randomly choose one multicast address to be used in the group establishment process. The short ID can be used in person-to-person communication to enable group members to program slave user equipment to receive any request sent to the multicast address by using the short ID instead. This request is transmitted essentially simultaneously to user UEC in step 2-5.

The user equipments UEB and UEC, which are conventionally connected to a second communication network N2, such as a GSM network, are prepared to receive the multicast request within the same first network N1, such as a wireless local are network or a Bluetooth network, handle the request corresponding in steps 2-6 and 2-10. The requested information can comprise information needed to establish the group as described in Figure 1 plus some other additional information, such as priorities. After that UEB and UEC send their responses correspondingly to the group creator UEA in steps 2-8 and 2-12.

In step 2-14 user UEA handles the responses. The information can be presented on the screen of the terminal e.g. as a table or a list. This makes it also easy for the group creator to check the information, to add new members to the group or to delete unwanted members from the table or from the list.

After that group data can be sent in step 2-15 (in Figures 2 and 3) to some suitable element of the communications system. A database can be located outside or inside the first network N1. One example of the database can be a connection processing server CPS in the second network N2. Alternatively, data can be stored e.g. in the terminal of UEA. Still another possibility is to share group data with members of the group. Finally in step 2-16 an accept/reject message is send to user UEB and in step 2-18 to user UEC so that the users know whether they are accepted to the group or not.

One possible implementation of the invention and its embodiments in the above-mentioned situation where a user wants to establish a group communication between nearby users in an office or outside is discussed in the following. The user who is willing to create the group can pick "*Create group*" - "*Find from WLAN*" function e.g. from the menu of his equipment terminal. After selecting this function the user equipment can send an invitation to all or to some nearby equipment to join the group. Any one of the equipment which received the invitation can select the function "*Join group*". If the function is selected the equipment can send information to the user equipment of user UEA. After the answer of the equipment has arrived, UEA can select "*Accept members*" - *"Save to system*". Finally user UEA can send a confirmation to all or some members of the group, e.g. as an MMS message (Multimedia Messaging Message) with necessary conventional text with richer content types, such as photographs, images, voice clips, and video clips.

The slave user equipment can be automatically enquired for the information needed to establish the group. Alternatively, the information can be pulled together manually by entering the required information e.g. in fields of the user terminal.

An example of the operation of user equipment as slave user equipment is illustrated in Fig. 4. In step 4-2 the slave equipment joins the same network with the master user equipment, after which the slave equipment prepares to receive the request in step 4-4. When it has received the request it can send the requested information for the group establishment as the response to the master user equipment in step 4-6.

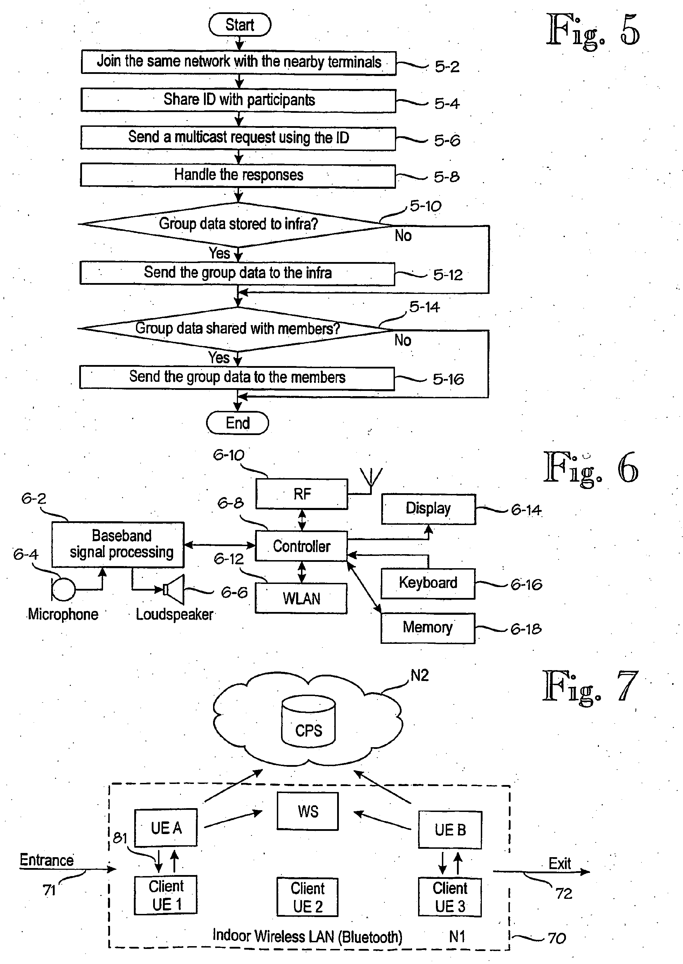

An example of the operation of user equipment as master user equipment is illustrated in Fig. 5. In step 5-2 the user equipment working as master user equipment joins the same network within nearby terminals. It shares the same identification ID with participants of the network in step 5-4, and sends a request to at least one slave user equipment UEB, UEC in step 5-6 using the ID. The request can be sent via the first communications network prompting the user of the slave user equipment UEB, UEC to send user information for group establishment. In step 5-8 it receives a response 2-8, 2-12 (Figure 2) comprising user information for group establishment from at least one slave user equipment, and handles the responses. This handling means e.g. creating the group based on the information received in responses from the at least one slave user equipment.

In step 5-10 it is checked whether the data should be stored in the infrastructure. If data is to be stored in the infrastructure, e.g. in a network other than WLAN network, the information on the created group is sent to the infra (step 5-12), e.g. to the second network for establishing said group. If the data is not stored in the infrastructure, the process proceeds directly to the step 5-14.

In step 5-14 it is checked whether the group data is shared with the members of the group. If yes, the group data is sent to the other group members (step 5-16) and the process ends. If the group data is not shared, the process ends without sending the group data to the other members.

An example of a possible implementation of user equipment UEA, UEB, UEC is illustrated in a simplified block diagram shown Figure 6. An RF part 6-10 represents any radio frequency functions and hardware required by a specific air interface employed. A WLAN part 6-12 represents any wireless local area network functions and hardware required by a specific wireless local area network air interface employed. The actual implementation of the RF part 6-10 or the WLAN part 6-12 is not relevant to the present invention.

Baseband signal processing 6-2 represents any baseband signal processing required in any specific implementation, such as analog-digital (A/D) conversion of the analog speech signal from the microphone 6-4, voice-encoding, IP packet building, frame building, deframing, IP packet debuilding, voice-decoding, digital-analog (D/A) conversion of the received digital speech signal into an analog signal applied to a loudspeaker 6-6.

A controller 6-8 controls the RF part 6-10, the WLAN part 6-12, and the baseband signal processing 6-2. The controller 6-8 controls the signaling, both outband and embedded, as well as IP packet building and debuilding.

A user interface may include a display 6-14 and a keyboard 6-16. It should be appreciated that the blocks illustrated in Figure 6 are functional blocks, which can be implemented in a variety of different circuit configurations. For example, the baseband processing and the controller may be implemented in a single programmable unit (e.g. a CPU or a signal processor) or in a plurality of units.

The operation according to the present invention is primarily related to the controller part of the UE, and the basic invention may be implemented as program modifications in the control program of the UE, for example.

The memory 6-18 can be used e.g. for storing information on the created group(s).

An advantage of the method and arrangement of the invention and its embodiment described above is easier and faster establishment of the group and hence easier and faster establishment of group communication. Compared to the known solution, the invention is simpler to use.

A disadvantage which seems to arise with the invention is how to address the invitation only to correct users. However, this disadvantage can be alleviated easily as was described above. In case some unwanted users accept the invitation, the user UEA can still select the users from the answers and delete the unwanted answers. Another possibility to solve this problem is to use IP (Internet Protocol) multicasting. This requires the information on the multicasting address of the members of the group and the user who sends the invitation. This means that the sender of the request and the recepient of the request use the same address, i.e. the address must be known by both parties before the request is sent. Furthermore, it should be noted that the invitation must be from inside the network N1. This means that the user equipment of the network N1 is not communicating with a router of the network N1 by IGMP (Internet Group Management Protocol) that they are listening said multicast address. Furthermore, the used multicast address can be a link scoped multicast address or a local scoped multicast address ensuring that the request is not communicated outside the network N1. By using these functionalities only the expected equipment receives the invitation.

Only as an example, one implementation of the invention and its embodiments can use a Bluetooth WLAN network, terminals according to 3GPP Rel5 or Rel6 (3^{rd} Generation Partnership Project, Release 5/Release 6) standards and a Connection Processing Server CPS with group capabilities. The CPS server, which provides call signalling between network elements and supports several simultaneous calls throughout a distributed network, can also work as the database for group information.

From the WLAN point of view the possibility of sending the group message to all terminals attached to the local area network can be replaced by multicasting and the ideas of the Bluetooth network.

In the implementation of an all-IP network user equipment can be user equipment working in a radio access network and one or more databases can be databases in the IP (Internet Protocol) network.

The invention and its embodiments are not restricted to some specific group data or some specific use of group data, but can e.g. be used to collect group information from the Bluetooth network to terminal, and then sending the information to a group management server e.g. for presence and instant messaging. The established, created group can be used e.g. as an access control list as part of incoming traffic filtering service during a meeting.

The idea of the invention can further be applied to situations in which at least one ad hoc group is created for the persons in the same area. An ad hoc group can be formed automatically or semi-automatically from equipment that happen to be physically near each other. In these groups each equipment has equal status, which means that each equipment can access data stored in all other equipment. This is one example of the idea to use the invention and its embodiments for advertising purposes. These purposes can comprise e.g. asking whether the user in a rock concert is interested in receiving an advertisement from a record store and if one is interested in it, sending a discount coupon to that user.

Referring now to Figure 7, according to an aspect of the invention, clients entering a specific area 70 are automatically requested to send their identities for the group establishment according to the invention. In an embodiment of the invention, equipment handled by a human, e.g. user equipment, or an automated equipment UEA is located near a doorway 71 to a commerce or service facility 70, such as a store, department store, concert hall, restaurant, pub. The equipment UEA is capable of communication over the short distance network N1 with the user equipments CLIENT UE entering the specific area. The doorway may be provided with a detector (not shown), such as motion detector or a detector recognizing entering user equipment. When detecting an entrance of a new client or user equipment, the detector sends indication of the event to the master user equipment UEA. Regardless how the entrance is detected, the master user equipment UEA sends a user information request 81 according to the present invention over the short distance network N1. If no detection is employed, the request may be sent periodically at least in the proximity of the entrance point 71. The request may be in form of a "Who are you?" question, for example. The question is presented to the user of the user equipment CLIENT, i.e. the entering client. Using a menu of the user equipment, the client may switch on and off the feature to answer to the "who are you" question Only if the client allows his UE to answer, the user equipment CLIENT sends the identity of the client to the master equipment UEA over the short distance network N1 and the client is appended to the group when he passes the doorway. The master user equipment UEA sends information on the modified group to the mobile network N2. The same information can also be sent over the short-range network N1 to other user equipment UE or to a client management unit, such as a workstation WS. There may be another master equipment UEB that asks the same "Who are you?" question on the exit doorway 72. Also the UEB sends the modified group information to the mobile network N2 and/or to other UE or the WS. This way user can be removed from the group and the group is up to date consisting of those people who are present and who allowed attaching them to the group when stepping in. Alternatively and more preferably, no exit monitoring is used but the client may remain as a member of the group for a certain period of time or until he/she cancels the membership.

The owner of the place can easily collect groups i.e. list of clients that have visited his place the same day, the same week, or clients that are on location at the moment, etc. The owner of the place may handle the groups with a client management unit or a workstation, such as a personal computer (PC), and send group messages, invite people to a group session, etc, using the group or groups automatically established and updated in the mobile network N2. The workstation is preferably provided with means for communicating over the short distance network (such as the Bluetooth). It may also have communication means for communication over the mobile network (such as the GSM).The group lists can also be used for advertising and marketing to the group members.

It will be obvious to a person skilled in the art that, as the technology advances, the inventive concept can be implemented in various ways. The invention and its embodiments are not limited to the examples described above but may vary within the scope of the claims.

## Claims

1. A method, **characterized by** comprising:
sending (2-4, 2-5) a request for group establishment from one user equipment (UEA) acting as a master user equipment to at least one slave user equipment (UEB, UEC) over a first communications network,;
receiving from the at least one slave user equipment (UEB, UEC) a response (2-8, 2-12) comprising information on user for group establishment, over the first communications network ;
creating or modifying, by the master user equipment (UEA) the group based on the information received in responses from the at least one slave user equipment (UEB, UEC) the group comprising the master user equipment and the at least one slave user equipment; and
sending, by the master user equipment (UEA), the information on the created or modified group to a group management server in a second communications network for establishing the communications group in the second communications network.

2. A method according to claim 1, **characterized by** further comprising:
sending by the master user equipment (UEA), the information on the created or modified group to all members of the group over the communications network.

3. A method according to claim 1 or 2, **characterized in that** the request and /or the response is one of the following: a multicast request, a point-to-point request, a short message request, an instant message request, an e-mail message request, a multimedia message request, a unified messaging message request, a WAP (Wireless Application Protocol) message request or an SIP (Session Initiation Protocol) message request.

4. A method according to claim 1 or 2, **characterized by** further comprising the master equipment (UEA), in step of creating or modifying the group, checking the response from slave user equipment (UEB, UEC) and if the information of the slave user equipment (UEB, UEC) is acceptable, adding the slave user equipment (UEB, UEC) to the group.

5. A method according to any one of the preceding claims, **characterized in that** the request consists of a file which guides the user of the slave user equipment (UEB, UEC) to send only the information needed to establish the group to the master user equipment (UEA).

6. A method according to one of the claims 1 - 5, **characterized in that** the request consists of a file which guides the slave user equipment (UEB, UEC) to send only the information needed to establish the group to the master user equipment (UEA).

7. A method according to any one of the preceding claims, **characterized by** retrieving, by the master user equipment (UEA), the file for the request from the communications network, and/or from its memory, and/or from the slave user equipment (UEB, UEC).

8. A method according to any one of the preceding claims, **characterized by** creating, by the master user equipment (UEA), the file for the request.

9. A method according to any one of the preceding claims, **characterized in that** the first communications network is one of the following networks: a circuit switched network, a packet switched network, a wireless local area network, an IrDA network, a Bluetooth network or a network according to the IEEE 802.11 standards.

10. A method according to any one of the preceding claims, **characterized in that** the second communications network is one of the following networks: a digital mobile communications network, a circuit switched network, a packet switched network, a wireless local area network, an IrDA network, a Bluetooth network or a network according to the IEEE 802.11 standards.

11. A method according to any one of the preceding claims, **characterized by** further comprising
before sending (2-4, 2-5) the multicast request from the master user equipment (UEA) to at least one slave user equipment (UEB, UEC), the master user equipment (UEA) selects an identification to be used in the information interchange.

12. A method according to any one of the preceding claims, **characterized in that** the request is send by using multicasting.

13. A method according to claims 1-11, **characterized in that** the request is send by using broadcasting.

14. A method according to claim 11, **characterized in that** the identification is an MSISDN number.

15. A method according to any one of the preceding claims, **characterized by** sending, by the master user equipment, the request automatically when new user equipment enters a predetermined area.

16. A method according to claim 15, **characterized by**
detecting entrance of a client or new user equipment into the predetermined area,
sending the request over the first communications network at least in the proximity of the entrance point.

17. A method according to claim 15, **characterized by** sending the request periodically over the first communications network at least in the proximity of the entrance point to the predetermined area.

18. A method according to any one of the preceding claims, **characterized by** deleting, by the master user equipment, user equipment from a group when the user equipment exits a predetermined area or after a predetermined period of time has elapsed.

19. A method according to claim 18, **characterized by**
detecting exit of a client or user equipment from the predetermined area,
sending an identification request over the first communications network at least in the proximity of the exit point,
deleting a group member from the group on the basis of a response to the identification request, if any.

20. A method according to any one of the preceding claims, **characterized by** sending, by the master user equipment or another device provided with the group information, advertisements to the group members over the second communications network.

21. User equipment comprising a group communications capability, **characterized by** comprising
means for sending (2-4, 2-5) a request for group establishment to at least one slave user equipment (UEB, UEC) over a first communications network;
means for receiving from at least one slave user equipment (UEB, UEC) over the communications network a response (2-8, 2-12) comprising information on user for group establishment over the first communications network;
means for creating or modifying the group based on the information received in responses from the at least one slave user equipment (UEB, UEC); and
means for sending the information on the created or modified group to a group management server in a second communications network for establishing the communications group in the second communications network.

22. User equipment comprising a group communications capability according to claim 21, **characterized by** further comprising
means for sending the information on the created or modified group to all members of the group via the communications network.

23. User equipment according to claim 21 or 22, **characterized in** the first communications network include one of the following communications networks: a circuit switched network, a packet switched network, a wireless local area network, an IrDA network, a Bluetooth network or a network according to the IEEE 802.11 standards.

24. User equipment according to claim 21, 22 or 23, **characterized in that** the second communication network is one of the following networks: a digital mobile communications network, a circuit switched network,
a packet switched network, a wireless local area network, an IrDA network, a Bluetooth network or a network according to the IEEE 802.11 standards.

25. A communications system, comprising
a mobile communications network,
a plurality of user equipment each including a group communications capability in the mobile communications network, and a transceiver for further communication over a first communications network, **characterized by** comprising:
at least one user equipment being configured to operate as master user equipment (UEA) and to send (2-4, 2-5) a request for group establishment to at least one slave user equipment (UEB, UEC) over the first communications network [;
at least one user equipment being configured to operate as slave user equipment (UEB, UEC) and to send to the master user equipment (UEA) over the first communications network a response (2-8, 2-12) comprising information on user for group establishment;
the master user equipment (UEA) being further configured to create or modify the group based on the information received in responses from the at least one slave user equipment (UEB, UEC); and
the master user equipment (UEA) being further configured to send the information on the created or modified group to as group management server in a second communications network for establishing the communications group in the second communications network.

26. A communications system according to claim 25, **characterized by** further comprising:
the master user equipment (UEA) being further configured to send the information on the created or modified group to all members of the group over the first communications network.

27. A system according to 25 or 26, **characterized in that** the first communications network include one of the following communications networks: a wireless local area network, an IrDA network, a Bluetooth network or a network according to the IEEE 802.11 standards.

28. A system according to any one of claims 25 to 27, **characterized in that** the master user equipment being configured to send the request automatically when new user equipment enters a predetermined area.

29. A system according to 28, **characterized in that** the master user equipment being further configured to delete user equipment from a group when the user equipment exits a predetermined area or a predetermined time has elapsed from entering the member to the group.

30. A system according to 28 or 29, **characterized by**
means for sending advertisements to the group members over the communications network.

31. A computer program comprising program code means for performing any of the steps of any of the preceding claims 1 to 20, when the program is run on a computer.

## Patentansprüche

1. Verfahren, **dadurch gekennzeichnet, dass** es Folgendes umfasst:
Senden (2-4, 2-5) einer Anforderung zur Gruppenherstellung von einer Benutzereinrichtung (UEA), die als übergeordnete Benutzereinrichtung (master user equipment) wirkt, über ein erstes Kommunikationsnetz zu zumindest einer untergeordneten Benutzereinrichtung (slave user equipment) (UEB, UEC);
Empfangen einer Antwort (2-8, 2-12), die Informationen über den Benutzer zur Gruppenherstellung umfasst, über das erste Kommunikationsnetz von der zumindest einen untergeordneten Benutzereinrichtung (UEB, UEC);
Erzeugen oder Abändern der Gruppe auf Basis der Informationen, die in Antworten von der zumindest einen untergeordneten Benutzereinrichtung (UEB, UEC) erhalten werden, durch die übergeordnete Benutzereinrichtung (UEA), wobei die Gruppe die übergeordnete Benutzereinrichtung und die zumindest eine untergeordnete Benutzereinrichtung umfasst; und
Senden der Informationen über die erzeugte oder abgeänderte Gruppe durch die übergeordnete Benutzereinrichtung (UEA) zu einem Gruppenverwaltungsserver in einem zweiten Kommunikationsnetz, um die Kommunikationsgruppe im zweiten Kommunikationsnetz herzustellen.

2. Verfahren nach Anspruch 1, **dadurch gekennzeichnet, dass** es ferner Folgendes umfasst:
Senden der Informationen über die erzeugte oder abgeänderte Gruppe durch die übergeordnete Benutzereinrichtung (UEA) über das Kommunikationsnetz zu allen Mitgliedern der Gruppe.

3. Verfahren nach Anspruch 1 oder 2, **dadurch gekennzeichnet, dass** die Anforderung und/oder die Antwort eine der Folgenden ist: eine Gruppenrufanforderung, eine Punkt-zu-Punkt-Anforderung, eine Anforderung durch Kurzbenachrichtigung (short message), eine Anforderung durch sofortige Benachrichtigung (instant message), eine E-Mail-Nachrichtenanforderung, eine Multimediennachrichtenanforderung, eine Anforderung durch eine einheitliche Benachrichtigungsnachricht (unified messaging), eine Anforderung durch eine WAP(Wireless Application Protocol, drahtloses Anwendungsprotokoll)-Nachricht oder eine Anforderung durch eine SIP(Session Initiation Protocol, Sitzungseinleitungsprotokoll)-Nachricht.

4. Verfahren nach Anspruch 1 oder 2, **dadurch gekennzeichnet, dass** es ferner umfasst, dass die übergeordnete Vorrichtung (UEA) im Schritt des Erzeugens oder Abänderns der Gruppe die Antwort von der untergeordneten Benutzereinrichtung (UEB, UEC) prüft und die untergeordnete Benutzereinrichtung (UEB, UEC) im Fall der Annehmbarkeit der Informationen von der untergeordneten Benutzereinrichtung (UEB, UEC) zur Gruppe hinzufügt.

5. Verfahren nach einem der vorhergehenden Ansprüche, **dadurch gekennzeichnet, dass** die Anforderung aus einer Datei besteht, die den Benutzer der untergeordneten Benutzereinrichtung (UEB, UEC) anleitet, nur die Informationen, die zur Herstellung der Gruppe benötigt werden, zur übergeordneten Benutzereinrichtung (UEA) zu senden.

6. Verfahren nach einem der Ansprüche 1 bis 5, **dadurch gekennzeichnet, dass** die Anforderung aus einer Datei besteht, die die untergeordnete Benutzereinrichtung (UEB, UEC) anleitet, nur die Informationen, die zur Herstellung der Gruppe benötigt werden, zur übergeordneten Benutzereinrichtung (UEA) zu senden.

7. Verfahren nach einem der vorhergehenden Ansprüche, **gekennzeichnet durch** Abrufen der Datei für die Anforderung durch die übergeordnete Benutzereinrichtung (UEA) vom Kommunikationsnetz und/oder von ihrem Speicher und/oder von der untergeordneten Benutzereinrichtung (UEB, UEC).

8. Verfahren nach einem der vorhergehenden Ansprüche, **gekennzeichnet durch** Erzeugen der Datei für die Anforderung **durch** die übergeordnete Benutzereinrichtung (UEA).

9. Verfahren nach einem der vorhergehenden Ansprüche, **dadurch gekennzeichnet, dass** das erste Kommunikationsnetz eines der folgenden Netze ist: ein leitungsvermitteltes Netz, ein paketvermitteltes Netz, ein drahtloses lokales Netz, ein IrDA-Netz, ein Bluetooth-Netz oder ein Netz gemäß den Standards von IEEE 802.11.

10. Verfahren nach einem der vorhergehenden Ansprüche, **dadurch gekennzeichnet, dass** das zweite Kommunikationsnetz eines der folgenden Netze ist: ein digitales Mobilkommunikationsnetz, ein leitungsvermitteltes Netz, ein paketvermitteltes Netz, ein drahtloses lokales Netz, ein IrDA-Netz, ein Bluetooth-Netz oder ein Netz gemäß den Standards von IEEE 802.11.

11. Verfahren nach einem der vorhergehenden Ansprüche, **dadurch gekennzeichnet, dass** es umfasst,
dass die übergeordnete Benutzereinrichtung (UEA) vor dem Senden (2-4, 2-5) der Gruppenrufanforderung von der übergeordneten Benutzereinrichtung (UEA) zu zumindest einer untergeordneten Benutzereinrichtung (UEB, UEC) eine Kennung wählt, die beim Informationsaustausch verwendet werden soll.

12. Verfahren nach einem der vorhergehenden Ansprüche, **dadurch gekennzeichnet, dass** die Anforderung durch Benutzen einer Gruppenrufsendung gesendet wird.

13. Verfahren nach einem der Ansprüche 1 bis 11, **dadurch gekennzeichnet, dass** die Anforderung durch Benutzen einer Rundrufsendung gesendet wird.

14. Verfahren nach Anspruch 11, **dadurch gekennzeichnet, dass** die Kennung eine MSISDN-Nummer ist.

15. Verfahren nach einem der vorhergehenden Ansprüche, **gekennzeichnet durch** automatisches Senden der Anforderung durch die übergeordnete Benutzereinrichtung, wenn eine neue Benutzereinrichtung einen vorbestimmten Bereich betritt.

16. Verfahren nach Anspruch 15, **gekennzeichnet durch**
Feststellen des Eintritts eines Kunden oder einer neuen Benutzereinrichtung in den vorbestimmten Bereich,
Senden der Anforderung über das erste Kommunikationsnetz zumindest in der Nähe des Eintrittspunkts.

17. Verfahren nach Anspruch 15, **gekennzeichnet durch** periodisches Senden der Anforderung über das erste Kommunikationsnetz zumindest in der Nähe des Eintrittspunkts in den vorbestimmten Bereich.

18. Verfahren nach einem der vorhergehenden Ansprüche, **gekennzeichnet durch** Löschen einer Benutzereinrichtung durch die übergeordnete Benutzereinrichtung aus einer Gruppe, wenn die Benutzereinrichtung einen vorbestimmten Bereich verlässt oder nachdem ein vorbestimmter Zeitraum vergangen ist.

19. Verfahren nach Anspruch 18, **gekennzeichnet durch**
Feststellen des Austritts eines Kunden oder einer Benutzereinrichtung aus dem vorbestimmten Bereich,
Senden einer Kennungsanforderung über das erste Kommunikationsnetz zumindest in der Nähe des Austrittspunkts,
Löschen eines Gruppenmitglieds aus der Gruppe auf Basis einer Antwort auf die Kennungsanforderung, falls eine solche vorhanden ist.

20. Verfahren nach einem der vorhergehenden Ansprüche, **gekennzeichnet durch** Senden von Werbungen **durch** die übergeordnete Benutzereinrichtung oder eine andere Vorrichtung, der die Gruppeninformationen bereitgestellt sind, über das zweite Kommunikationsnetz zu den Gruppenmitgliedern.

21. Benutzereinrichtung, die eine Gruppenkommunikationsfähigkeit umfasst, **dadurch gekennzeichnet, dass** sie Folgendes umfasst:
ein Mittel zum Senden (2-4, 2-5) einer Anforderung zur Gruppenherstellung über ein erstes Kommunikationsnetz zu zumindest einer untergeordneten Benutzereinrichtung (UEB, UEC);
ein Mittel zum Empfangen einer Antwort (2-8, 2-12), die Informationen über den Benutzer zur Gruppenherstellung umfasst, über das erste Kommunikationsnetz von zumindest einer untergeordneten Benutzereinrichtung (UEB, UEC);
ein Mittel zum Erzeugen oder Abändern der Gruppe auf Basis der Informationen, die in Antworten von der zumindest einen untergeordneten Benutzereinrichtung (UEB, UEC) erhalten werden; und
ein Mittel zum Senden der Informationen über die erzeugte oder abgeänderte Gruppe zu einem Gruppenverwaltungsserver in einem zweiten Kommunikationsnetz, um die Kommunikationsgruppe im zweiten Kommunikationsnetz herzustellen.

22. Benutzereinrichtung, die eine Gruppenkommunikationsfähigkeit umfasst, nach Anspruch 21, **dadurch gekennzeichnet, dass** sie ferner Folgendes umfasst:
ein Mittel zum Senden der Informationen über die erzeugte oder abgeänderte Gruppe über das Kommunikationsnetz zu allen Mitgliedern der Gruppe.

23. Benutzereinrichtung nach Anspruch 21 oder 22, **dadurch gekennzeichnet, dass** das erste Kommunikationsnetz eines der folgenden Kommunikationsnetze beinhaltet: ein leitungsvermitteltes Netz, ein paketvermitteltes Netz, ein drahtloses lokales Netz, ein IrDA-Netz, ein Bluetooth-Netz oder ein Netz gemäß den Standards von IEEE 802.11.

24. Benutzereinrichtung nach Anspruch 21, 22 oder 23, **dadurch gekennzeichnet, dass** das zweite Kommunikationsnetz eines der folgenden Netze ist: ein digitales Mobilkommunikationsnetz, ein leitungsvermitteltes Netz, ein paketvermitteltes Netz, ein drahtloses lokales Netz, ein IrDA-Netz, ein Bluetooth-Netz oder ein Netz gemäß den Standards von IEEE 802.11.

25. Kommunikationssystem, umfassend
ein Mobilkommunikationsnetz,
mehrere Benutzereinrichtungen, die jeweils eine Gruppenkommunikationsfähigkeit im Mobilkommunikationsnetz und einen Sendeempfänger zur weiteren Kommunikation über ein erstes Kommunikationsnetz beinhalten, **dadurch gekennzeichnet, dass** es Folgendes umfasst:
zumindest eine Benutzereinrichtung, die dazu konfiguriert ist, als übergeordnete Benutzereinrichtung (UEA) tätig zu sein und eine Anforderung zur Gruppenherstellung über das erste Kommunikationsnetz zu zumindest einer untergeordneten Benutzereinrichtung (UEB, UEC) zu senden (2-4, 2-5);
zumindest eine Benutzereinrichtung, die dazu konfiguriert ist, als untergeordnete Benutzereinrichtung (UEB, UEC) tätig zu sein und eine Antwort (2-8, 2-12), die Informationen über den Benutzer zur Gruppenherstellung umfasst, über das erste Kommunikationsnetz zur übergeordneten Benutzereinrichtung (UEA) zu senden;
wobei die übergeordnete Benutzereinrichtung (UEA) ferner dazu konfiguriert ist, die Gruppe auf Basis der Informationen, die in Antworten von der zumindest einen untergeordneten Benutzereinrichtung (UEB, UEC) erhalten werden, zu erzeugen oder abzuändern; und
wobei die übergeordnete Benutzereinrichtung (EA) ferner dazu konfiguriert ist, die Informationen über die erzeugte oder abgeänderte Gruppe zu einem Gruppenverwaltungsserver in einem zweiten Kommunikationsnetz zu senden, um die Kommunikationsgruppe im zweiten Kommunikationsnetz herzustellen.

26. Kommunikationssystem nach Anspruch 25, **dadurch gekennzeichnet, dass** es ferner umfasst, dass die übergeordnete Benutzereinrichtung (UEA) ferner dazu konfiguriert ist, die Informationen über die erzeugte oder abgeänderte Gruppe über das erste Kommunikationsnetz zu allen Mitgliedern der Gruppe zu senden.

27. System nach Anspruch 25 oder 26, **dadurch gekennzeichnet, dass** das erste Kommunikationsnetz eines der folgenden Kommunikationsnetze beinhaltet: ein drahtloses lokales Netz, ein IrDA-Netz, ein Bluetooth-Netz oder ein Netz gemäß den Standards von IEEE 802.11.

28. System nach einem der Ansprüche 25 bis 27, **dadurch gekennzeichnet, dass** die übergeordnete Benutzereinrichtung dazu konfiguriert ist, die Anforderung automatisch zu senden, wenn eine neue Benutzereinrichtung einen vorbestimmten Bereich betritt.

29. System nach Anspruch 28, **dadurch gekennzeichnet, dass** die übergeordnete Benutzereinrichtung ferner dazu konfiguriert ist, eine Benutzereinrichtung aus einer Gruppe zu löschen, wenn die Benutzereinrichtung einen vorbestimmten Bereich verlässt oder seit dem Eintreten des Mitglieds in die Gruppe eine vorbestimmte Zeit vergangen ist.

30. System nach Anspruch 28 oder 29, **gekennzeichnet durch** ein Mittel zum Senden von Werbungen zu den Gruppenmitgliedern über das Kommunikationsnetz.

31. Computerprogramm, umfassend ein Programmcodemittel zum Durchführen eines beliebigen der Schritte eines der vorhergehenden Ansprüche 1 bis 20, wenn das Programm an einem Computer ausgeführt wird.

## Revendications

1. Procédé, **caractérisé en ce qu'**il comporte les étapes consistant à :
transmettre (2 - 4, 2 - 5) une demande pour un établissement de groupe d'un équipement utilisateur (UEA) agissant en qualité d'équipement utilisateur maître, à au moins un équipement utilisateur esclave (UEB, UEC), sur un premier réseau de communication ;
recevoir, à partir dudit au moins un équipement utilisateur esclave (UEB, UEC), une réponse (2 - 8, 2 - 12) comportant des informations sur un utilisateur candidat à un établissement de groupe, sur le premier réseau de communication ;
créer ou modifier, par l'intermédiaire de l'équipement utilisateur maître (UEA), le groupe, sur la base des informations reçues dans des réponses provenant dudit au moins un équipement utilisateur esclave (UEB, UEC), le groupe comportant l'équipement utilisateur maître et ledit au moins un équipement utilisateur esclave ; et
transmettre, par l'intermédiaire de l'équipement utilisateur maître (UEA), les informations sur le groupe modifié ou créé, à un serveur de gestion de groupe dans un second réseau de communication pour établir le groupe de communications dans le second réseau de communication.

2. Procédé selon la revendication 1, **caractérisé en ce qu'**il comporte en outre l'étape consistant à :
transmettre, par l'intermédiaire de l'équipement utilisateur maître (UEA), les informations sur le groupe modifié ou créé, à tous les membres du groupe sur le réseau de communication.

3. Procédé selon la revendication 1 ou 2, **caractérisé en ce que** la demande et/ou la réponse est l'une parmi les suivantes : une demande de diffusion multiple, une demande de poste à poste, une demande de message court, une demande de message instantané, une demande de message de courriel, une demande de message multimédia, une demande de message de messagerie unifiée, une demande de message de protocole WAP (protocole d'application sans fil) ou une demande de message de protocole SIP (protocole d'ouverture de session).

4. Procédé selon la revendication 1 ou 2, **caractérisé en ce qu'**il comporte en outre les étapes dans lesquelles l'équipement utilisateur maître (UEA), lors de l'étape de création ou de modification du groupe, vérifie la réponse en provenance de l'équipement utilisateur esclave (UEB, UEC) et, si les informations de l'équipement utilisateur esclave (UEB, UEC) sont acceptables, ajoute l'équipement utilisateur esclave (UEB, UEC) au groupe.

5. Procédé selon l'une quelconque des revendications précédentes, **caractérisé en ce que** la demande comporte un fichier qui guide l'utilisateur de l'équipement utilisateur esclave (UEB, UEC) pour envoyer uniquement les informations nécessaires pour établir le groupe à l'équipement utilisateur maître (UEA).

6. Procédé selon l'une des revendications 1 à 5, **caractérisé en ce que** la demande comporte un fichier qui guide l'équipement utilisateur esclave (UEB, UEC) pour envoyer uniquement les informations nécessaires pour établir le groupe à l'équipement utilisateur maître (UEA).

7. Procédé selon l'une quelconque des revendications précédentes, **caractérisé par** l'étape consistant à récupérer, par l'intermédiaire de l'équipement utilisateur maître (UEA), le fichier connexe à la demande à partir du réseau de communication, et/ou à partir de sa mémoire, et/ou à partir de l'équipement utilisateur esclave (UEB, UEC).

8. Procédé selon l'une quelconque des revendications précédentes, **caractérisé par** l'étape consistant à créer, par l'intermédiaire de l'équipement utilisateur maître (UEA), le fichier connexe à la demande.

9. Procédé selon l'une quelconque des revendications précédentes, **caractérisé en ce que** le premier réseau de communication est l'un parmi les réseaux suivants : un réseau à commutation de circuits, un réseau à commutation de paquets, un réseau local sans fil, un réseau IrDA, un réseau Bluetooth ou un réseau selon les normes IEEE 802.11.

10. Procédé selon l'une quelconque des revendications précédentes, **caractérisé en ce que** le second réseau de communication est l'un parmi les réseaux suivants : un réseau de communication mobile numérique, un réseau à commutation de circuits, un réseau à commutation de paquets, un réseau local sans fil, un réseau IrDA, un réseau Bluetooth ou un réseau selon les normes IEEE 802.11.

11. Procédé selon l'une quelconque des revendications précédentes, **caractérisé en ce qu'**il comporte en outre les étapes dans lesquelles,
avant d'envoyer (2 - 4, 2 - 5) la demande de diffusion multiple de l'équipement utilisateur maître (UEA) à au moins un équipement utilisateur esclave (UEB, UEC), l'équipement utilisateur maître (UEA) sélectionne une identification à utiliser dans l'échange d'informations.

12. Procédé selon l'une quelconque des revendications précédentes, **caractérisé en ce que** la demande est envoyée en utilisant une diffusion multiple.

13. Procédé selon l'une des revendications 1 à 11, **caractérisé en ce que** la demande est envoyée en utilisant une diffusion générale.

14. Procédé selon la revendication 11, **caractérisé en ce que** l'identification est un numéro MSISDN.

15. Procédé selon l'une quelconque des revendications précédentes, **caractérisé par** l'étape consistant à transmettre automatiquement la demande, par l'intermédiaire de l'équipement utilisateur maître, lorsqu'un nouvel équipement utilisateur entre dans une zone prédéterminée.

16. Procédé selon la revendication 15, **caractérisé par** l'étape consistant à
détecter l'entrée d'un client ou d'un nouvel équipement utilisateur dans la zone prédéterminée,
transmettre la demande sur le premier réseau de communication au moins à proximité du point d'entrée.

17. Procédé selon la revendication 15, **caractérisé par** l'étape consistant à
transmettre la demande périodiquement sur le premier réseau de communication au moins à proximité du point d'entrée de la zone prédéterminée.

18. Procédé selon l'une quelconque des revendications précédentes, **caractérisé par** l'étape consistant à supprimer, par l'intermédiaire de l'équipement utilisateur maître, un équipement utilisateur d'un groupe lorsque l'équipement utilisateur sort d'une zone prédéterminée ou après qu'une période de temps prédéterminée s'est écoulée.

19. Procédé selon la revendication 18, **caractérisé par** l'étape consistant à
détecter la sortie d'un client ou équipement utilisateur de la zone prédéterminée,
transmettre une demande d'identification sur le premier réseau de communication au moins à proximité du point de sortie,
supprimer un membre de groupe du groupe sur la base d'une réponse à la demande d'identification, le cas échéant.

20. Procédé selon l'une quelconque des revendications précédentes, **caractérisé par** l'étape consistant à transmettre, par l'intermédiaire de l'équipement utilisateur maître ou un autre dispositif présentant les informations de groupe, des annonces aux membres de groupe sur le second réseau de communication.

21. Équipement utilisateur comportant une capacité de communication de groupe, **caractérisé en ce qu'**il comporte
des moyens pour transmettre (2 - 4, 2 - 5) une demande d'établissement de groupe à au moins un équipement utilisateur esclave (UEB, UEC) sur un premier réseau de communication ;
des moyens pour recevoir à partir d'au moins un équipement utilisateur esclave (UEB, UEC) sur le réseau de communication, une réponse (2 - 8, 2 - 12) comportant des informations connexes à un utilisateur candidat à l'établissement de groupe, sur le premier réseau de communication ;
des moyens pour créer ou modifier le groupe, sur la base des informations reçues dans des réponses provenant dudit au moins un équipement utilisateur esclave (UEB, UEC) ; et
des moyens pour transmettre les informations sur le groupe modifié ou créé à un serveur de gestion de groupe dans un second réseau de communication pour établir le groupe de communications dans le second réseau de communication.

22. Équipement utilisateur comportant une capacité de communication de groupe selon la revendication 21, **caractérisé en ce qu'**il comporte en outre
des moyens pour transmettre les informations sur le groupe modifié ou créé à tous les membres du groupe par l'intermédiaire du réseau de communication.

23. Équipement utilisateur selon la revendication 21 ou 22, **caractérisé en ce que** le premier réseau de communication inclut l'un parmi les réseaux de communication suivants : un réseau à commutation de circuits, un réseau à commutation de paquets, un réseau local sans fil, un réseau IrDA, un réseau Bluetooth ou un réseau selon les normes IEEE 802.11.

24. Équipement utilisateur selon la revendication 21, 22 ou 23, **caractérisé en ce que** le second réseau de communication est l'un parmi les réseaux suivants : un réseau de communication mobile numérique, un réseau à commutation de circuits, un réseau à commutation de paquets, un réseau local sans fil, un réseau IrDA, un réseau Bluetooth ou un réseau selon les normes IEEE 802.11.

25. Système de communication, comportant
un réseau de communication mobile,
une pluralité d'équipements utilisateurs comportant chacun une capacité de communication de groupe dans le réseau de communication mobile, et un émetteur - récepteur pour une communication supplémentaire sur un premier réseau de communication, **caractérisé en ce qu'**il comporte :
au moins un équipement utilisateur configuré pour fonctionner en qualité d'équipement utilisateur maître (UEA) et pour envoyer (2 - 4, 2 - 5) une demande d'établissement de groupe à au moins un équipement utilisateur esclave (UEB, UEC) sur le premier réseau de communication ;
au moins un équipement utilisateur configuré pour fonctionner en qualité d'équipement utilisateur esclave (UEB, UEC) et pour envoyer, à l'équipement utilisateur maître (UEA) sur le premier réseau de communication, une réponse (2 - 8, 2 - 12) comportant des informations connexe à l'utilisateur candidat à l'établissement de groupe ;
l'équipement utilisateur maître (UEA) étant en outre configuré pour créer ou modifier le groupe sur la base des informations reçues dans des réponses provenant dudit au moins un équipement utilisateur esclave (UEB, UEC) ; et
l'équipement utilisateur maître (UEA) étant en outre configuré pour envoyer les informations sur le groupe modifié ou créé à un serveur de gestion de groupe dans un second réseau de communication pour établir le groupe de communications dans le second réseau de communication.

26. Système de communication selon la revendication 25, **caractérisé en ce qu'**il comporte en outre :
l'équipement utilisateur maître (UEA) en outre configuré pour envoyer les informations sur le groupe modifié ou créé à tous les membres du groupe sur le premier réseau de communication.

27. Système selon la revendication 25 ou 26, **caractérisé en ce que** le premier réseau de communication inclut l'un parmi les réseaux de communication suivants : un réseau local sans fil, un réseau IrDA, un réseau Bluetooth ou un réseau selon les normes IEEE 802.11.

28. Système selon l'une quelconque des revendications 25 à 27, **caractérisé en ce que** l'équipement utilisateur maître est configuré pour envoyer la demande automatiquement lorsqu'un nouvel équipement utilisateur entre dans une zone prédéterminée.

29. Système selon la revendication 28, **caractérisé en ce que** l'équipement utilisateur maître est configuré en outre pour supprimer un équipement utilisateur d'un groupe lorsque l'équipement utilisateur sort d'une zone prédéterminée ou lorsqu'un temps prédéterminé s'est écoulé depuis l'entrée du membre dans le groupe.

30. Système selon la revendication 28 ou 29, **caractérisé par**
des moyens pour envoyer des annonces aux membres de groupe sur le réseau de communication.

31. Programme informatique comportant des moyens de code de programme pour mettre en oeuvre l'une quelconque des étapes selon l'une quelconque des revendications 1 à 20, lorsque le programme est exécuté sur un ordinateur.
